(19) Europäisches Patentamt

European Patent Office

Office européen des brevets

(11) EP 0 229 285 B1

(12) EUROPÄISCHE PATENTSCHRIFT

(45) Veröffentlichungstag und Bekanntmachung des Hinweises auf die Patenterteilung:
21.08.1996 Patentblatt 1996/34

(51) Int Cl.6: **H01S 3/105**, H01S 3/134, H01S 3/139, H01S 3/11

(21) Anmeldenummer: 86116661.9

(22) Anmeldetag: 01.12.1986

(54) **Verfahren und Anordnung zur Erzeugung von CO2-Laserimpulsen hoher Leistung**

Method and Arrangement for the generation of high-power CO2-laser pulses

Procédé et dispositif de génération d'impulsions de haute puissance par un laser à CO2

(84) Benannte Vertragsstaaten:
AT BE CH DE FR GB IT LI NL SE

(30) Priorität: 09.01.1986 DD 286070

(43) Veröffentlichungstag der Anmeldung:
22.07.1987 Patentblatt 1987/30

(73) Patentinhaber: **Feinmechanische Werke Halle GmbH**
**D-06118 Halle (DE)**

(72) Erfinder:
 • **Pöhler, Manfred, Dr. rer. nat.**
 **DDR-4090 Halle-Neustadt (DD)**
 • **Staupendahl, Gisbert, Dr. sc. nat.**
 **DDR-4002 Halle (DD)**
 • **Wittig, Richard**
 **DDR-4002 Halle (DD)**

(74) Vertreter: **Radwer, Dieter et al**
**Hübner - Neumann - Radwer**
**Frankfurter Allee 286**
**10317 Berlin (DE)**

(56) Entgegenhaltungen:
DE-A- 2 415 971        GB-A- 1 248 405
GB-A- 2 000 900

 • APPLIED OPTICS, Band 3, Nr. 3, März 1964, Seiten 431-432; A.D. WHITE: "Reflecting prisms for dispersive optical maser cavities"
 • OPTICAL & QUANTUM ELECTRONICS, Band 12, Nr. 1, Januar 1980, Seiten 77-79, Chapman and Hall Ltd., London, GB; G.STAUPENDAHL et al.: "A new simple method for 10ns CO2 laser pulse generation"

**Beschreibung**

Die Erfindung betrifft ein Verfahren und eine Anordnung zur Erzeugung von $CO_2$-Laserimpulsen hoher Leistung, die einerseits die Durchführung von Materialbearbeitungsaufgaben gestattet, die hohe Leistungsdichten am Bearbeitungsort erfordern, wie z. B. Schneiden, Schweißen und Gravieren bzw. definierter Materialabtrag, insbesondere bei Metallen mit hohem Reflexionsgrad für die Laserstrahlung, z. B. bei Aluminium und Kupfer, und andererseits den Einsatz relativ kleiner, kompakter $CO_2$-Laser bei Applikationen, wie z. B. Ritzen und definierter Materialabtrag in der Elektronik- und Mikroelektronik-Technologie ermöglicht.

Zahlreiche Applikationen von $CO_2$-Laser-Strahlung erfordern Leistungsdichten, die sich auch bei optimaler Fokussierung nur durch Strahlungsleistungen weit im kW-Bereich realisieren lassen. Um diese Leistung zu erzielen, läßt man in solchen Fällen die $CO_2$-Laser im allgemeinen im Impulsbetrieb arbeiten. Neben der Erzeugung ausreichender Spitzenleistungen ist dabei die maximale Umsetzung der potentiell zur Verfügung stehenden mittleren Leistung des entsprechenden Lasers in Strahlungsimpulse ein angestrebtes Ziel.

Es sind verschiedenartige technische Lösungen zur Erzeugung von $CO_2$-Laser-Hochleistungsimpulsen bekannt.

Eine Möglichkeit der Erzeugung von $CO_2$-Laser-Strahlungsimpulsen stellt das Prinzip des transversal angeregten Hochdruck-$CO_2$-Lasers (TEA-Laser) dar, das wegen der hohen Drücke des Lasergases die Realisierung außerordentlich hoher Impuls-Spitzenleistungen gestattet. Die Erzielung der häufig benötigten hohen Impuls-Folgefrequenzen ist jedoch sehr problematisch. Frequenzen von einigen Hundert Hertz erfordern bereits enorme technischen Aufwand.

Technisch vorrangig wird die elektrische Impulsanregung der $CO_2$-Laser-Gasentladung zur Erzeugung intensiver Strahlungsimpulse für die Materialbearbeitung genutzt. Dieser Mechanismus gestattet Impuls-Folgefrequenzen bis zu 2,5 kHz bei Niederdruck-$CO_2$-Lasern. Allerdings ist bei der elektrischen Pulsung der Gasentladung die erreichbare Oberhöhung der Impulsspitzenleistung im Vergleich zur cw-Leistung auf etwa einen Faktor 10 beschränkt, da sich die Prozesse des Aufbaus der Besetzungsinversion durch die Gasentladung und des Abbaus der Inversion durch das Anschwingen des Lasers zeitlich überlappen.

Dieser Nachteil wird bei den verschiedenen Methoden der Güteschaltung von $CO_2$-Lasern weitgehend vermieden, da sich bei ihnen zunächst eine maximal hohe Besetzungeinversion ausbilden kann, die dann durch schlagartige Erhöhung der Güte des Laserresonators in einen Strahlungsimpuls mit stark überhöhter Leistung umgesetzt wird. Alle herkömmlichen Methoden der Güteschaltung besitzen jedoch im Hinblick auf Materialbearbeitungsaufgaben wesentliche Mängel. Hauptmängel sind

- ungünstiges Tastverhältnis Laser an/Laser aus und damit beträchtlicher Verlust an mittlerer Leistung bei aktiver Drehspiegel-Güteschaltung (vgl. Flynn, IEEE Journal of Quantum Electronics, vol. QE-2, 378 (1966));
- Beschränkung auf periodische Impulsfolgen bzw. feste Impuls-Folgefrequenz, z. B. bei passiver Güteschaltung (siehe z. B. App. Phys. Lett. 11, 88 (1967));
- hohe Kosten z. B. bei aktiver Schaltung mittels elektrooptischer Kristalle (siehe z. B. IEE Journal of Quantum Electronics, vol. QE-2, 243 (1966)).

Versuche, die Vorzüge der impulsmäßigen Zufuhr der Pumpenergie und der aktiven Güteschaltung der Laser miteinander zu vereinigen, stellen die in den DE-OS 26 10 652 und DE-OS 29 13 270 beschriebenen Anordungen dar. Beide Anordnungen sind jedoch nur anwendbar auf optisch gepumpte Laser im sichtbaren bzw. nahen infraroten Spektralbereich, wo die Möglichkeit des vorteilhaften Einsatzes von elektrooptischen Kristallen besteht (im Gegensatz zum $CO_2$-Laser-Spektralbereich zwischen 9 µm und 11 µm Wellenlänge). Durch Synchronisierung der Pumplichtimpulse mit der Funktion des elektrooptischen Güteschalters konnten günstige Parameter der erzeugten Laserimpule erzielt werden.

Aus der DE-A 24 15 971 und GB-A 1 248 405 sind ferner Lösungen bekannt, in denen Fabry-Perot-Interferometeranordnungen zur Modulation von Laserstrahlungen eingesetzt werden. In beiden Anwendungsfällen erfolgt mit Hilfe der Fabry-Perot-Interferometer eine Modulation der Frequenz der Laserstrahlung.

Der Erfindung liegt die Aufgabe zugrunde, ein Verfahren zur Erzeugung von Hochleistungs-Laserstrahlungsimpulsen und eine Anordnung für einen $CO_2$-Laser anzugeben, der die maximale Umsetzung der potentiell zur Verfügung stehenden, im Lasermedium speicherbaren Energie in Strahlungsimpulse hoher Leistung gewährleistet und ein günstiges Masse-Leistungsverhältnis des Lasers, hohe Produktivität und folglich relativ niedrige Kosten bei Materialbearbeitungsaufgaben garantiert.

Erfindungsgemäß wird diese Aufgabe durch ein Verfahren und eine Anordnung mit den in den Ansprüchen 1 und 2 angegeben Merkmalen gelöst. Eine weitere vorteilhafte Ausführung der Laseranordnung enthält Anspruch 3.

Mit der vorliegenden Erfindung wird die maximale Umsetzung der potentiell zur Verfügung stehenden, im Lasermedium speicherbaren Energie demzufolge dadurch erreicht, daß in einem ersten Schritt mit Hilfe eines definierten elektrischen Pumpimpulses das Gasgemisch des Niederdruck-$CO_2$-Lasers in einen Zustand extrem hoher Besetzungsinversion gebracht und in einem zweiten Schritt durch einen speziellen Güteschaltungseffekt diese Inversion schlagartig derart abgebaut wird, daß Strahlungsimpulse mit extremer Leistungsüberhöhung entstehen.

Der $CO_2$-Laserresonator für dieses Verfahren wird gebildet durch

- einen ersten Resonatorspiegel mit fester Reflektivität $R_1$;
- ein frequenzselektives Element;
- eine stark winkelselektive Spezial-Gasentladungsröhre gemäß DD-WP H 01 S/199 976, DD 134 415
- und ein spezielles Bauelement aus für die Laserstrahlung transparentem Material, welches als zweiter Resonatorspiegel mit variabler Reflektivität $R_2$ fungiert und auf einer Fabry-Perot-Interferometeranordnung mit schnell veränderbarer optischer Wellenlänge beruht, bei welcher mittels entsprechender Steuersignale das Verhältnis des transmittierten zum reflektierten Anteil der auf sie auftreffenden Strahlung bzw. ihre Reflektivität $R_2$ im Intervall $o \leqq R_2 \leqq R_{max}$ variiert werden kann, wobei der jeweilige Wert von $R_2$ eine Funktion der Laserwellenlänge $\lambda$ ist.

Wird nun der Hochleistungs-$CO_2$-Laser mit Hilfe des frequenzselektiven Elementes gezwungen, auf einer festen im allgemeinen der für hohe Ausgangsleistungen optimalen Wellenlänge $\lambda = 10,59 \, \mu m$ zu arbeiten und mittels der winkelselektiven Spezial-Gasentladungsröhre transversaler Einmodenbetrieb (TEM 00) realisiert, steht am Ort der Fabry-Perot-Interferometeranordnung ein ebenes, monochromatisches Wellenfeld zur Verfügung, das entsprechend dem eingestellten Wert von $R_2$ mehr oder weniger stark in den Laser zurückgekoppelt wird. Steuert man $R_2$ gegen 0, wird bei Unterschreiten der Arbeitsschwelle $R_s$ des Lasers die Laserleistung 0, steuert man $R_2$ wieder über die Schwelle $R_s$, setzt Laserfunktion ein, d. h. man kann den dargestellten Resonator aktiv güteschalten.

Es ist bekannt, daß mittels impulsförmiger Zufuhr der Pumpenergie von Hochleistungs-$CO_2$-Lasern die thermische Belastung des Lasergasgemisches verringert und dadurch Strahlungsimpulse erzeugt werden können, deren Spitzenleistung wesentlich über der Laserleistung bei kontinuierlicher Stromzufuhr liegt. Die erfindungsgemäße Verfahrensweise der Erzeugung von $CO_2$-Laser-Hochleistungsimpulsen erfordert nun folgendes Arbeitsregime. Während die Generierung von Laserstrahlung mittels der speziellen Interferometeranordnung unterbrochen ist (das bedeutet $R_2 < R_s$), wird das aktive Lasermedium durch einen Stromimpuls in den Zustand maximaler Inversion gebracht. Im Moment maximaler Inversion werden die Gesamtverluste des Lasers mittels der speziellen Interferometeranordnung schlagartig so weit verringert, daß der Laser oberhalb der Schwelle ist und Strahlungsimpulse extrem starker Leistungsüberhöhung emittiert. Die üblichen Maximalfrequenzen der Strompulsung liegen bei etwa 2,5 kHz. Da die spezielle Interferometeranordnung ebenfalls diese Arbeitsfrequenz gestattet, können auf die dargestellte Weise bis in diesen Frequenzbereich Impulse erzeugt werden, deren Leistungsüberhöhung einige $10^2$ erreichen kann. Ein wichtiges Merkmal der erfindungsgemäßen Lösung ist die Realisierung einer genau definierten zeitlichen Verzögerung zwischen dem Hochspannungs-Pumpimpuls und dem Steuerimpuls der speziellen Interferometeranordnung mittels eines entsprechenden Elektronik-Bausteins. Dadurch wird gewährleistet, daß $R_2$ die Schwelle $R_s$ genau dann überschreitet, wenn durch den Pumpimpuls maximale Besetzungsinversion erreicht worden ist.

Bei der dargestellten Anordnung zur Erzeugung von $CO_2$-Laser-Hochleistungsimpulsen kann der hohe Gewinn des aktiven Mediums, der "gain", zu einem beträchtlichen Problem für die Funktion des Verfahrens werden. Fungiert nämlich die beschriebene Interferometeranordnung als Auskoppelelement des Lasers mit variablem Auskoppelgrad, dann müßte der andere Resonatorspiegel nach den üblichen Konstruktionsprinzipien für $CO_2$-Materialbearbeitungslaser vollständig reflektierend, d. h. $R_1 \approx 1$ sein. Unter diesen Bedingungen treten jedoch folgende Schwierigkeiten auf. Erstens schwingt ein $CO_2$-Laser von beispielsweise 400 W kontinuierlicher Ausgangsleistung bereits bei wenigen Prozent Rückkopplung vom Auskoppelelement an, d. h., es ist mit vernünftigem Justieraufwand außerordentlich kompliziert, eine solche Anordnung unter die Schwelle zu bringen, was wiederum die Erzeugung stark überhöhter Impulse in hohem Maße beeinträchtigt. Das schwierige Justierproblem besteht dabei in der Forderung, das Fabry-Perot-Auskoppelelement auf eine Reflektivität von weniger als 1 % einzustellen. Die zweite Schwierigkeit verursachen vom Werkstück reflektierte und in den Laserresonator zurücklaufende Anteile der Laserstrahlung. Selbst wenn die Leistung dieser Strahlung nur wenige Prozent der Laserausgangsleistung ausmacht, kann das System auch bei völlig transparente Auskoppelelement anschwingen. Der Resonator würde dann durch den 100%-Spiegel auf der einen und das Werkstück bzw. das Plasma im Fokus auf der anderen Seite gebildet, ein Impulsbetrieb im gewünschten Sinne wäre ebenfalls kaum möglich.

Diese Probleme werden erfindungsgemäß dadurch gelöst, daß nicht $R_1 \approx 1$ gewählt wird, sondern ein wesentlich kleinerer Wert der Reflektivität, was bedeutet, daß erstens dieser teildurchlässige Spiegel aus transparentem Material bestehen muß und zweitens an beiden Resonatorenden Strahlung ausgekoppelt wird, die genutzt werden kann. Ist man vorzugsweise an einem Hauptarbeitsstrahl interessiert, der nur möglichst geringe Verluste durch einen im Prinzip unerwünschten "Nebenstrahl" erleidet, muß $R_1$ folgendermaßen optimiert werden, wenn man z.B. erreichen will, daß der Hauptteil der Laserstrahlung über den Resonatorspiegel mit der festen Reflektivität $R_1$ ausgekoppelt wird. Für praktikable Interferometeranordnung kann für $R_2$ als Variationsintervall $0 \leqq R_2 \leqq 0,9$ angenommen werden. $R_1$ wird nun erfindungsgemäß so gewählt, daß es so klein wie möglich, aber mindestens so groß ist, daß der Laser stabil

arbeitet, wenn $R_2$ ausreichend groß, vorzugsweise größer als 0,5 ist. Durch entsprechende Wahl von $R_1$ lassen sich erstens die Gesamtverluste des Resonators so dimensionieren, daß die Laserschwelle in einem für die Justierung des Interferometers völlig unkritischen Bereich, z.B. bei $R_2 \approx 0,3$ liegt, zweitens die Leistungsverluste, die aus der Auskopplung eines zweiten, schwächeren Strahles über die Interferometeranordnung entstehen, minimal werden und drittens läßt sich erreichen, daß der gesamte Resonator im Zustand hoher Gesamtverluste mit $R_2 \approx 0$, also im ausgeschalteten Zustand, wegen des kleinen $R_1$ praktisch auf Durchgang geschaltet ist, so daß Rückkopplungseffekte mit vom Werkstück reflektierter Strahlung auf. ein Minimum reduziert bzw. ein Anschwingen des Lasers in diesem Zustand über Reflexe unmöglich gemacht werden.

Wenn die von der auf maximale Transmission justierten Interferometeranordnung und die vom Werkstück reflektierte Laserstrahlung nicht zum Anschwingen des Lasers führen, so kann der Laser als echter "Einstrahl-Laser" konzipiert werden, indem der erste Resonatorspiegel als vollständig reflektierender Spiegel mit $R_1 \approx 1$ ausgebildet wird.

Eine vorteilhafte Ausführungsform der erfindungsgemäßen Anordnung zur Erzeugung von $CO_2$-Laser-Hochleistungsimpulsen ist dadurch gekennzeichnet, daß das frequenzselektive Element und der erste Resonatorspiegel mit fester Reflektivität $R_1$ als Funktionseinheit durch ein Prisma gebildet werden, das außerdem vorzugsweise als vakuumdichter Abschluß des einen Endes der Laser-Gasentladungsröhre dient. Das Prisma besteht aus für die Laserstrahlung der Wellenlänge $\lambda$ transparentem Material, z. B. NaCl, das die Brechzahl $n(\lambda)$ besitzt und erfüllt folgende Bedingungen:

1.) Die ins Resonatorinnere gerichtete, unbeschichtete Seite des Prismas steht unter dem Brewsterwinkel zur Resonatorachse. Das bedeutet, daß die in der Einfallsebene polarisierte Laserstrahlung diese Fläche praktisch ohne Reflexionsverluste durchsetzt. Für den Winkel $\alpha$ zwischen der Flächennormalen der Prismenfläche und der Resonatorachse gilt dann

$$\tan \alpha = n.$$

2.) Wird der brechende Winkel $\varepsilon$ des Prismas so gewählt, daß

$$\varepsilon = \arcsin \sqrt{\frac{1}{1+n^2}}$$

gilt, wird die nach außen gerichtete Seite des Prismas senkrecht von der Laserstrahlung getroffen und fungiert entsprechend ihrer Reflektivität $R_1$ als Resonatorspiegel. Dabei kann $R_1$, entsprechend den oben gestellten Forderungen an diese Größe, entweder durch die natürliche Reflektivität des Prismenmaterials, durch spezielle Schichtensysteme oder durch Anblocken geeigneter Reflexionsoptiken gegeben sein.

Die Erfindung soll nachstehend an einem Ausführungsbeispiel näher erläutert werden.

Die zugehörigen Zeichnungen zeigen:

Figur 1:    - die Prinzipskizze der erfindungsgemäßen Anordnung;

Figur 2:    - den Querschnitt des erfindungsgemäßen Spiegel-Prismas.

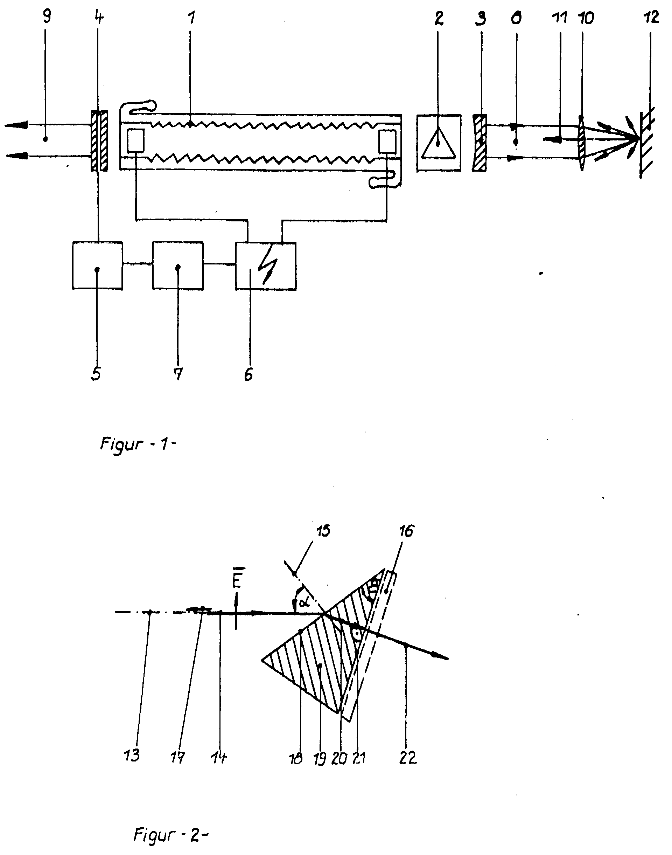

Figur 1 illustriert die Anordnung zur Erzeugung von $CO_2$-Laser-Hochleistungsimpulsen für die Materialbearbeitung. Die spezielle Gasentladungsröhre 1 gemäß DD-WP H 01 S/ 199 976 (GB-A-2 000 900) und das frequenzselektive Element 2 sorgen dafür, daß der Laser bei entsprechender Resonatorkonfiguration, insbesondere entsprechender Abstimmung des Innendurchmessers der Gasentladungsröhre 1 und des Krümmungsradius' des Resonatorspiegels 3 mit der festen Reflektivität $R_1$, im TEM OO-Betrieb arbeitet. Dann steht am Ort der speziellen Interferometeranordnung 4 das geforderte ebene und monochromatische Wellenfeld zur Verfügung. Die spezielle Interferometeranordnung 4 wird vorzugsweise durch den Modulator gemäß DD-WP H 01 S/264 005 6 (EP-A-167 843) gebildet. Die Modulation der Laserstrahlleistung erfolgt in der oben dargestellten Weise über die Änderung der Reflektivität $R_2$ dieses Modulators mittels elektrischer Steuersignale, die die elektrische Versorgungseinheit 5 bereitstellt. Wie oben dargelegt, verlassen den Laser zwei Ausgangsstrahlen, ein relativ starker Laserstrahl 8 und ein relativ schwacher Laserstrahl 9. Beide können für Arbeitsaufgaben genutzt werden. Im in Figur 1 dargestellten Beispiel wird eine Materialbearbeitungsaufgabe mit dem Arbeitsstrahl 8 durchgeführt, der mittels der Linse 10 auf das Werkstück 12 fokussiert wird. Eventuell in den Laser zurückreflektierte Strahlung 11 ist für die Funktion des Verfahrens unschädlich, wie vorstehend dargelegt wurde.

Die Stromversorgung der Gasentladung erfolgt über die Stromversorgungseinrichtung 6, die die impulsförmige Zufuhr der Pumpenergie gestattet. Die vorstehend dargelegte erforderliche Synchronisierung zwischen den Pumpimpuls und dem von der elektrischen Versorgungseinheit 5 bereitgestellten Steuerimpuls für die spezielle Interferometeranordnung 4 erfolgt mit Hilfe des Elektronikbausteins 7.

Figur 2 zeigt den Strahlverlauf durch das Spiegel-Prisma 19, welches das frequenzselektive Element 2 und den Resonatorspiegel 3 in sich vereinigt und eine günstige Variante des beschriebenen Verfahrens ermöglicht. Die parallel zur Resonatorachse 13 verlaufende Strahlung im Resonatorinneren 14 fällt auf die ins Resonatorinnere gerichtete, unbeschichtete Seite 18 des Prismas 19 unter dem Brewsterwinkel $\alpha$ und gelangt praktisch verlustfrei als gebrochener Strahl 20 in das Prisma 19, das aus für die Laserstrahlung der Wel-

lenlänge $\lambda$ transparentem Material, z. B. NaCl, besteht und die Brechzahl n ($\lambda$) besitzt. Die Strahlung sei in der Zeichenebene polarisiert, was durch die Lage des $\vec{E}$-Vektors in Figur 2 angedeutet wird. Bei entsprechender Wahl des brechenden Winkels $\varepsilon$ des Prismas fällt der Strahl 20 senkrecht auf die nach außen gerichtete Seite des Prismas 21 mit der wirksamen Reflektivität $R_1$, wobei $R_1$ entweder durch die natürliche Reflektivität des Prismenmaterials, durch spezielle Schichtensysteme oder durch das Anblocken geeigneter Reflexionsoptiken 16 gegeben ist. Ein Teil 17 dieser Strahlung wird in den Resonator zurückgekoppelt, während der Hauptanteil als Arbeitsstrahl 22 das Prisma und damit den Laser verläßt.

**Patentansprüche**

1. Verfahren zur Erzeugung von $CO_2$-Laserimpurien hoher Leistung durch Modulation der Laserstrahlung unter Verwendung einer Fabry-Perot-Interferometeranordnung, wobei

   - der $CO_2$-Laser mittels eines frequenzselektiven Elementes (2) und einem winkelselektiven Element in Form einer Gasentladungsröhre (1) gezwungen wird, auf einer vorgegebenen festen, im allgemeinen für hohe Ausgangsleistungen optimalen Wellenlänge zu arbeiten, wobei

   - die Reflektivität $R_1$ eines ersten Resonatorspiegels (3) fest ist und so klein wie möglich, aber mindestens so groß gewählt wird, daß der Laser stabil arbeitet, wenn die variierbare Reflektivität $R_2$ eines zweiten Resonatorspiegels ausreichend groß, vorzugsweise größer als 0,5 ist und die Resonatorgesamtverluste mittels der variierbaren Reflektivität $R_2$, gebildet durch eine steuerbare Fabry-Perot-Interferometeranordnung (4), die einen Modulator mit hoher Grenzfrequenz darstellt und als zweiter Resonatorspiegel mit variierbarer Reflektivität dient, schnell zwischen einem Zustand, in dem sich der Laser unterhalb seiner Arbeitsschwelle befindet und in einem Zustand mit voller Laserfunktion im TEM 00 Mode, eingestellt werden und

   - synchron zu den elektrischen Steuersignalen der Interferometeranordnung (4) mit variierbarer Reflektivität $R_2$, aber mit einem genau definierten zeitlichen Vorlauf zu ihnen, elektrische Anregungsenergien der Gasentladung in der Laserröhre mittels einer Stromversorgungseinrichtung (6) und eines Elektronikbausteines (7) impulsförmig so zugeführt wird, daß bei minimaler thermischer Belastung des Lasergemisches eine maximale Besetzungsinversion genau in dem Moment erreicht wird in dem der $CO_2$-Laser mittels der variierbaren Reflektivität $R_2$ seine Arbeitsschwelle überschreitet und auf diese Weise Strahlungsimpulse extrem starker Leistungsüberhöhung entstehen und den Laser als Arbeitsstrahlen (8; 9) verlassen.

2. Anordnung zur Erzeugung von $CO_2$-Laserimpursen hoher Leistung, bestehend aus einem Laserresonator (1;2;3), einer Stromversorgung (6) und einem Modulator (4) auf der Grundlage einer Fabry-Perot-Interferometeranordnung, wobei

   - die Stromversorgung der Laser-Gasentladung über die Stromversorgungseinrichtung (6) erfolgt, die die impulsförmige Zufuhr der Pumpenenergie gestattet, wobei ein elektronischer Baustein (7) zur Synchronisierung der Pump-Impulse mit den elektrischen Steuersignalen der Fabry-Perot-Interferometeranordnung (4) vorgesehen ist, und der Laserresonator aus

   - einem ersten Resonatorspiegel (3) mit fester Reflektivität $R_1$,

   - einem frequenzselektiven Element (2),

   - einer stark winkelselektiven Gasentladungsröhre (1), die in Zusammenwirken mit dem frequenzselektiven Element (2) und durch Abstimmung ihres Innendurchmessers zum Krümmungsradius des Resonatorspiegels (3) im TEM 00-Betrieb arbeitet, und

   - einer Fabry-Perot-Interferometeranordnung (4) mit schnell veränderbarer optischer Weglänge, aus für die Laserstrahlung transparentem Material, besteht, die als zweiter Resonatorspiegel mit variierbarer Reflektivität $R_2$ fungiert und einen Modulator mit hoher Grenzfrequenz darstellt, wobei die optische Weglänge mittels entsprechender Steuersignale so verändert werden kann, daß die Reflektivität $R_2$ zwischen Null und einem Maximum einstellbar und der jeweilige Wert von $R_2$ eine Funktion der Laserwellenlänge ist, und

   - die Reflektivität R1 des ersten Resonatorspiegels so klein wie möglich, aber mindestens so groß gewählt wird, daß der Laser stabil arbeitet, wenn die variierbare Reflektivität R2 ausreichend groß ist.

3. Anordnung nach Anspruch 2, **dadurch gekennzeichnet**, daß das frequenzselektive Element (2) und der erste Resonatorspiegel (3) mit fester Reflektivität $R_1$ als Funktionseinheit durch ein außerdem vorzugsweise als vakuumdichter Abschluß der Laser-Gasentladungsröhre (1) dienendes Prisma (19) gebildet werden, welches für die Laserstrahlungswellenlänge transparente Material der Brechzahl n ($\lambda$) besteht und so beschaffen ist, daß die ins Resonatorinnere gerichtete, unbeschichtete Seite (18) des Prismas (19) unter dem Brewster-Winkel zur Resonatorachse (13) steht und die nach außen gerichtete Seite (21) des Prismas (19) senkrecht von der Laserstrahlung (20) getroffen wird und entsprechend ihrer wirksamen Reflektivität $R_1$ als Resonatorspiegel (3) wirkt, wobei $R_1$ entweder durch die natürliche Reflektivität des Prismenmaterials, durch spezielle Beschichtungssysteme oder durch Anblocken einer geeigneten Reflektionsoptik (16) gegeben ist.

## Claims

1. A method of generating high-power $CO_2$-laser pulses by modulating the laser radiation using a Fabry-Perot interferometer arrangement, wherein

   - the $CO_2$ laser is caused by a frequency-selective element (2) and an angle-selective element in the form of a gas discharge tube (1) to lase generally at a predetermined fixed, generally best wavelength to provide high output power, wherein
   - the reflexivity $R_1$ of a first cavity mirror (3) is fixed and is selected to be as low as possible, but at least as high as to enable the laser to lase steadily when the variable reflexivity $R_2$ of a second cavity mirror is sufficiently high, preferably higher than 0.5, and the cavity total loss, by means of the variable reflexivity $R_2$ provided by the controllable Fabry-Perot interferometer arrangement (4), which constitutes a modulator having high threshold frequency and serves as a second cavity mirror having variable reflexivity, is adjusted at high speed between a state in which the laser is below its lasing threshold and a state of full lasing operation using the TEM 00 mode, and
   - in synchronism with the electrical control signals of the interferometer arrangement (4) having variable reflexivity $R_2$, but including an accurately defined time lead relative to them, electrical excitation energies of the gas discharge in the laser tube are supplied in the form of pulses from a power supply unit (6) und an electronic module (7) in such a manner that at minimum thermal load on the laser mixture a maximum population inversion is achieved at the very moment when the $CO_2$ laser by means of the reflexivity $R_2$ is exceeding its lasing threshold, and thus radiation pulses of highly superelevated power are generated and exit the laser as process beams (8; 9).

2. An arrangement for generating high-power $CO_2$-laser pulses, comprising a laser cavity (1; 2; 3), a power supply unit (6), and a modulator (4) based on a Fabry-Perot interferometer arrangement, wherein

   - power for the laser gas discharge is supplied from the power supply unit (6), which allows pulse-shaped pumping energy to be supplied, wherein an electronic module (7) is provided for synchronizing the pumping pulses to the electrical control signals of the Fabry-Perot interferometer arrangement (4), and the laser cavity comprises
   - a first cavity mirror (3) having fixed reflexivity $R_1$,
   - a frequency-selective element (2),
   - a highly angle-selective gas discharge tube (1) which, in cooperation with the frequency-selective element (2) and by adapting its internal diameter to the radius of curvature of the cavity mirror (3), lases in the TEM 00 mode of operation, and
   - a Fabry-Perot interferometer arrangement (4) including high-speed variable optical path length, made of material transparent to laser radiation, which arrangement functions as a second cavity mirror having variable reflexivity $R_2$ and constitutes a modulator having high threshold frequency, said optical path length being capable of being varied in such a manner that the reflexivity $R_2$ is adjustable between zero and a maximum and the respective value of $R_2$ is a function of the lasing wavelength, and
   - the reflexivity $R_1$ of the first cavity mirror is selected to be as low as possible, but at least as high as to enable the laser to lase steadily when the variable reflexivity $R_2$ is sufficiently high.

3. An arrangement according to Claim 2, characterized in that the frequency-selective element (2) and the first cavity mirror (3) having fixed reflexivity $R_1$ are constituted as a functional unit by a prisma (19) preferably also serving as a vacuum-tight termination of the gas discharge tube, which is made of material transparent to laser radiation wavelength having the refractive index n ($\lambda$) and is of such type that the uncoated surface (18) of the prism (19) facing the inside of the cavity is at the Brewster's angle with respect to the cavity axis, and the surface (21) of the prism (19) facing the outside is struck by the laser radiation (20) in perpendicular manner and functions as a cavity mirror (3) corresponding to its effective reflexivity $R_1$, $R_1$ being either given by the natural reflexivity of the material of the prism, special coating systems, or attaching a suitable reflexion-optical system (16).

**Revendications**

1. Procédé de génération d'impulsions de haute puissance par un laser $CO_2$ par modulation de la radiation laser en utilisant un dispositif interférentiel de Fabry et Pérot,

   - le laser à $CO_2$ étant contraint de travailler, sur une longueur d'onde prédéfinie et généralement optimale pour des puissances de sortie élevées, au moyen d'un élément sélecteur de fréquence (2) et d'un élément sélecteur d'angle en forme de tube à gaz (1),
   - la réflectivité $R_1$ d'un premier miroir de résonateur (3) étant fixe et étant choisie aussi faible que possible, mais au moins aussi importante que le laser puisse travailler de façon stable quand la réflectivité $R_2$ susceptible de varier d'un second miroir de résonateur est suffisamment importante, de préférence supérieure à 0,5 et le total des pertes de résonateur pouvant être réglées, en mode TEM 00 rapidement entre un état dans lequel le laser se trouve en-dessous de son seuil de travail et dans un état de pleine fonction laser, au moyen de la réflectivité $R_2$ susceptible de varier formée par un dispositif interférentiel de Fabry et Pérot (4), dispositif représentant un modulateur à haute fréquence limite et servant de second miroir de résonateur à réflectivité susceptible de varier, et
   - des énergies électriques d'excitation du gaz dans le tube à laser étant amenées, synchroniquement par rapport aux signaux électriques de commande du dispositif interférentiel (4) à réflectivité $R_2$ susceptible de varier mais avec une avance en temps par rapport à eux exactement définie, au moyen d'une installation d'alimentation en courant électrique (6) et d'un composant électronique (7) sous forme d'impulsions de telle façon qu'une inversion maximale d'occupation, lors de la charge thermique minimale du mélange laser, est exactement obtenue au moment où le laser à $CO_2$ dépasse son seuil de travail au moyen de la réflectivité $R_2$ susceptible de varier et où il apparaît de cette manière des impulsions de radiation d'une élévation de puissance extrèmement forte et où ces impulsions sortent du laser comme faisceaux de travail (8,9).

2. Dispositif de génération d'impulsions de haute puissance par un laser à $CO_2$, composé d'un résonateur laser (1;2;3), d'une alimentation en courant électrique (6) et d'un modulateur (4) sur la base d'un dispositif interférentiel de Fabry et Pérot,

   - l'alimentation en courant électrique du gaz pour le laser ayant lieu par l'intermédiaire de l'installation d'alimentation en courant électrique (6) qui permet l'arrivée sous forme d'impulsions de l'énergie de pompage, un composant électronique (7) étant pourvu des signaux électriques de commande du dispositif interférentiel de Fabry et Pérot pour synchroniser les impulsions de pompage, et le résonateur laser se composant
   - d'un premier miroir de résonateur (3) à réflectivité $R_1$ fixe,
   - d'un élément sélecteur de fréquence (2),
   - d'un tube à gaz (1) à forte sélection d'angle qui travaille en fonctionnement TEM 00 avec le concours de l'élément sélecteur de fréquence (2) et par le raccordement de son diamètre intérieur au rayon de courbure du miroir de résonateur (3), et
   - un dispositif interférentiel de Fabry et Pérot (4) à longueur d'onde optique susceptible d'être modifiée, composé d'un matériau transparent à la radiation laser, faisant fonction de second miroir de résonateur avec un réflectivité $R_2$ susceptible de varier et représentant un modulateur à haute fréquence limite, la longueur d'onde optique pouvant être modifiée au moyen de signaux correspondants de commande de telle façon que la réflectivité $R_2$ est susceptible d'être réglée entre zéro et un maximum et la valeur respective de $R_2$ étant réglée en fonction de la longueur d'onde du laser, et
   - la réflectivité $R_1$ du premier miroir de résonateur étant choisie aussi faible que possible, mais au moins aussi importante que le laser puisse travailler de façon stable quand la réflectivité $R_2$ susceptible de varier est suffisamment importante.

3. Dispositif selon la revendication 2, **caractérisé par le fait que** l'élément sélecteur de fréquence (2) et le premier miroir de résonateur (3) à réflectivité $R_1$ fixe sont formés en unité de fonctionnement par un prisme (19) servant en outre avantageusement de fermeture étanche au vide du tube à gaz laser (1), prisme qui se compose pour l'indice de réfraction n (λ) d'un matériau transparent à la longueur d'onde de radiation laser et qui est constitué de telle façon que le côté (18) du prisme (19) non-revêtu et orienté vers l'intérieur du résonateur se trouve dans l'angle d'incidence brewstérienne par rapport à l'axe de résonateur et que le côté (21) du prisme (19) orienté vers l'extérieur est frappé verticalement par rapport à la radiation laser (20) et agit, conformément à sa réflectivité R1 efficace, en miroir de résonateur (3), R1 étant définie soit par la réflectivité naturelle du matériau du prisme, par des systèmes spéciaux de revêtement, soit par blocage d'une optique appropriée de réflexion (16).

Figur -1-

Figur -2-